# FASCICULE DE BREVET EUROPEEN

(11) **EP 1 688 317 B1**
(45) Date de publication et mention de la délivrance du brevet: **09.07.2008**
(21) Numéro de dépôt: 06290212.7
(22) Date de dépôt: 06.02.2006
(51) Int. Cl.: B60R 21/06

(54) **Dispositif de protection enroulable des passagers d'un véhicule comprenant un rideau auquel un moyen de rappel est associé**
Rolleinrichtung zum Schutz von Fahrzeuginsassen, mit einem Vorhang und seinen Rückhohlmitteln
Roll-up vehicle passenger safety device comprising a curtain and its return means

(30) Priorité: 08.02.2005 FR 0501272
(43) Date de publication de la demande: 09.08.2006
(73) Titulaire: Centre d'Etude et de Recherche pour l'Automobile (CERA), 51100 Reims (FR)
(72) Inventeur: Bayle, André-Xavier, 51100 Reims (FR)
(74) Mandataire: Sayettat, Julien Christian

(56) Documents cités:
- EP-A- 0 672 557
- EP-A- 0 995 641
- EP-A- 1 147 946

## Description

L'invention concerne un dispositif de protection des passagers d'un véhicule automobile et un ensemble de protection comprenant un tel dispositif.

Plus particulièrement le dispositif comprend un rideau, notamment un filet résistant, destiné à être disposé entre le compartiment à bagages et l'habitacle du véhicule.

Il est connu de disposer un filet de protection entre le compartiment à bagages et l'habitacle du véhicule, de sorte à protéger les occupants du véhicule contre l'intrusion des bagages dans l'habitacle lors d'une collision.

Afin de permettre leur rangement lorsqu'ils ne sont pas utilisés, les filets peuvent être associés à un mécanisme d'enroulement autour d'un axe, le mécanisme étant logé dans un carter, de sorte à pouvoir accueillir le filet une fois enroulé.

L'agencement pour un filet de sécurité mentionné dans le paragraphe 5 du document EP 1147946 A1 comprend un tel mécanisme.

Une telle réalisation est complexe, coûteuse, encombrante et présente un poids important, notamment du fait du poids du carter.

On connaît par ailleurs le principe d'enroulement d'une bâche, ou analogue, sur elle même, par l'association à la bâche de moyens de rappel élastiques tels que des ressorts à lame dont l'état enroulé est stable.

L'invention a pour but de proposer un dispositif de protection, comprenant un rideau enroulable ou repliable sur lui même, simplifié par rapport à l'art antérieur, peu encombrant et de poids minime.

A cet effet et selon un premier aspect, l'invention propose un dispositif de protection des passagers d'un véhicule automobile, notamment de type break, destiné à être disposé entre le compartiment à bagages et l'habitacle, le dispositif comprenant :
- un rideau, notamment sous forme de filet,
- des premiers moyens de fixation d'un premier bord transversal du rideau à la structure du véhicule,
- des deuxièmes moyens de fixation d'un deuxième bord transversal du rideau à la structure du véhicule, les deuxièmes moyens de fixation étant détachables,
- les moyens de fixation étant agencés pour permettre une tension du rideau en position d'utilisation,
le rideau comprenant au moins un moyen de rappel élastique agencé pour permettre la rétraction longitudinale du rideau lorsqu'il n'est pas utilisé, les deuxièmes moyens de fixation étant détachés de la structure du véhicule.

Une telle réalisation permet notamment de s'affranchir d'un mécanisme d'enroulement autour d'un axe et d'un carter pour loger le mécanisme. Il en résulte une grande simplification de l'art antérieur.

En outre, le rideau rétracté est de faible encombrement.

L'absence de carter et de mécanisme d'enroulement permet par ailleurs un allégement important par rapport aux réalisations de l'art antérieur.

Selon un deuxième aspect, l'invention concerne un ensemble de protection comprenant un dispositif tel que décrit ci-dessus et une pièce d'habillage de la structure du véhicule, le premier bord transversal du dispositif étant associé à proximité de la pièce d'habillage, la pièce d'habillage comprenant un logement destiné à accueillir le dispositif en position rétractée.

Le rideau une fois rétracté est ainsi disposé dans le logement, ce qui confère une esthétique avantageuse à l'ensemble.

D'autres particularités et avantages de l'invention apparaîtront dans la description qui suit, faite en référence aux figures suivantes dans lesquelles :
- la figure 1 est une vue schématique de face (1a) d'un dispositif en position d'utilisation et en coupe longitudinale du même dispositif en position rétractée (1b), intermédiaire (1c) et d'utilisation (1d), selon un premier mode de réalisation,
- la figure 2 est une vue schématique de face d'un dispositif en position d'utilisation selon un deuxième mode de réalisation,
- la figure 3 est une vue schématique de face d'un dispositif en position d'utilisation selon un troisième mode de réalisation,
- la figure 4 est une vue schématique de face d'un dispositif en position d'utilisation selon un quatrième mode de réalisation,
- la figure 5 est une vue schématique en coupe d'un ensemble de protection comprenant le dispositif de la figure 1 en position d'utilisation (5a) et en position rétractée (5b),
- la figure 6 est une vue schématique en perspective d'un dispositif en position d'utilisation selon un cinquième mode de réalisation,
- la figure 7 est une vue schématique en coupe d'un ensemble de protection comprenant le dispositif de la figure 6 en position rétractée,
- la figure 8 est une vue schématique d'un dispositif, selon un sixième mode de réalisation, de face (8a) et en coupe (8b) en position d'utilisation et en coupe (8c) en position rétractée.

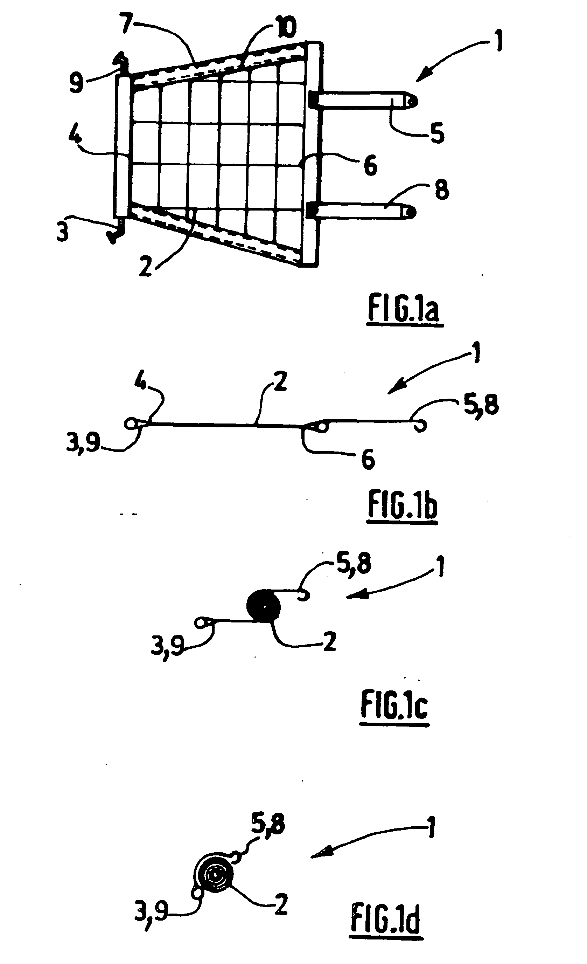

En référence à la figure 1a, et selon une première réalisation, on décrit à présent un dispositif de protection 1 des passagers d'un véhicule automobile, notamment de type break, destiné à être disposé entre le compartiment à bagages et l'habitacle, le dispositif comprenant :
- un rideau 2, notamment sous forme de filet,
- des premiers 3 moyens de fixation, ici les extrémités recourbées d'une tige métallique 9 associée au rideau, d'un premier 4 bord transversal du rideau 2 à la structure du véhicule,
- des deuxièmes 5 moyens de fixation, ici des lanières 8 pourvues d'attaches sur leur extrémité libre, d'un deuxième 6 bord transversal du rideau 2 à la structure du véhicule, les deuxièmes moyens de fixation étant détachables.

Les moyens de fixation 3 et 5 sont agencés pour permettre une tension du rideau 2 en position d'utilisation. Le rideau 2 comprend au moins un moyen de rappel élastique 7 agencé pour permettre la rétraction longitudinale du rideau lorsqu'il n'est pas utilisé, les deuxièmes moyens de fixation 5 étant dissociés de la structure du véhicule.

La figure 1b représente en coupe le dispositif en position d'utilisation, la figure 1c en position intermédiaire et la figure 1d en position rétractée.

On le voit, l'enroulement du rideau 2 sur lui même provoque l'enroulement simultané des lanières 8 à l'intérieur du rideau, l'ensemble présentant un caractère compact à l'état rétracté. Les lanières 8 peuvent dépasser légèrement une fois enroulées, ce qui permet de les saisir lorsque l'on veut dérouler le rideau 2.

Selon la réalisation représentée, le moyen de rappel 7 peut comprendre un ressort à lame dont l'état enroulé est stable, et plus particulièrement deux ressorts disposés sur tout ou partie de la longueur du rideau 2, notamment sur chacun des bords longitudinaux 10, ce qui permet une rétraction symétrique du rideau 2.

Le ressort à lame peut présenter une section transversale déformable entre une section aplatie lorsque le ressort est enroulé et une section bombée lorsque le ressort est déroulé, de sorte que le ressort présente deux positions stables, en position enroulée et déroulée.

En position enroulée du ressort, le rideau 2 s'enroule sur lui-même.

Selon une réalisation, le ressort est inséré dans une ganse associée ou rideau 2, par exemple par couture ou soudure.

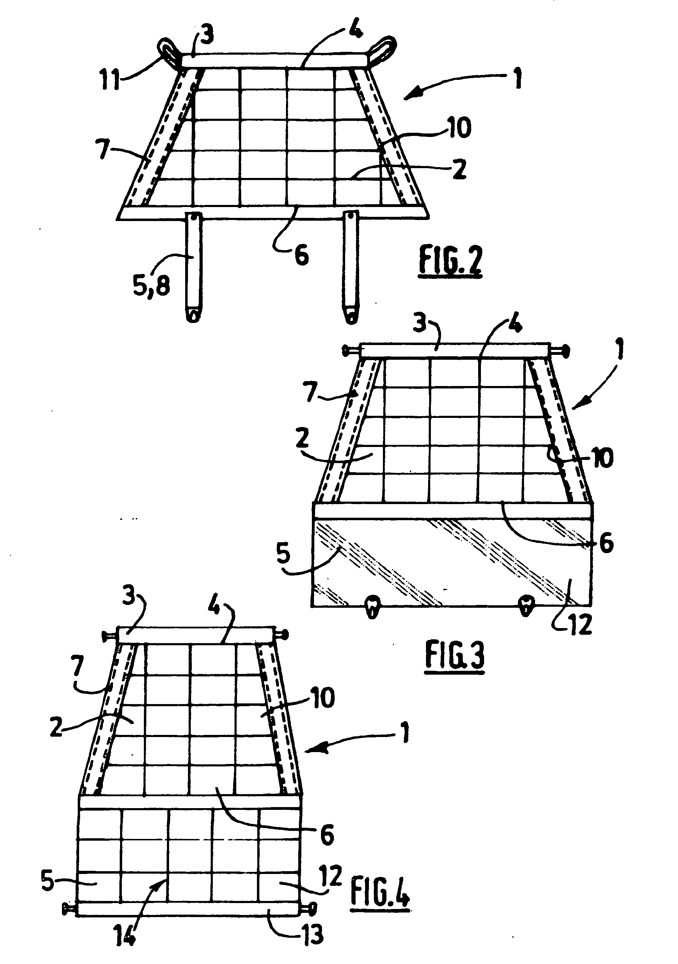

La figure 2 présente une autre réalisation dans laquelle les premiers moyens de fixation 3 sont sous forme d'anneaux 11 disposés en extrémités du premier bord transversal 4, le premier bord étant souple, les anneaux étant destinés à être associés à la structure du véhicule. Une tension du rideau 2 vers le bas, effectuée lors de l'accrochage des lanières 8 à la structure du véhicule, a pour effet de tendre le premier bord 4, ceci en raison de l'inclinaison des anneaux par rapport à la direction longitudinale du rideau 2.

Les figures 3 et 4 présentent deux autres réalisations dans lesquelles les lanières 5 sont remplacées par un rideau annexe 12, opaque (figure 3) ou non (figure 4), par exemple sous forme de filet, susceptible d'être accroché à la structure du véhicule.

Sur la figure 4, un axe rigide 13 est associé au bord transversal libre 14 du rideau annexe 12, ceci permettant le maintien rectiligne du bord 14.

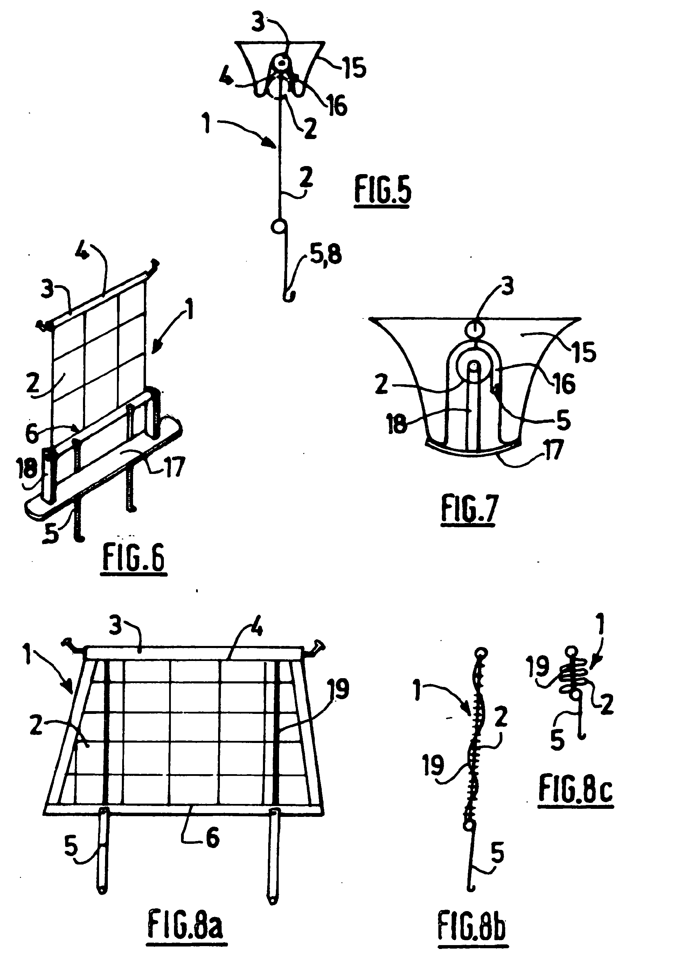

La figure 5 présente le dispositif 1, en position d'utilisation en trait plein et en position rétractée en trait pointillé, et une pièce d'habillage 15 de la structure du véhicule, le premier bord transversal 4 du dispositif étant associé à proximité de la pièce d'habillage 15. La pièce d'habillage 15 comprend un logement allongé 16 destiné à accueillir le dispositif en position rétractée, de sorte à conférer une esthétique avantageuse à l'ensemble.

Dans la figure 6, le dispositif 1 comprend en outre, disposé parallèlement à son deuxième bord transversal 6, une pièce de recouvrement 17 du logement 16 lorsque le dispositif est en position rétractée, la pièce de recouvrement étant reliée par deux pattes 18 au bord 6.

Il peut être prévu que la pièce de recouvrement 17 puisse être associée de façon réversible à la pièce d'habillage 15, par exemple au moyen de clips ou d'aimants.

Dans la figure 7, le dispositif de la figure 6 est logé en position rétractée dans le logement 16 de la pièce 15 décrit en figure 5. Selon la réalisation représentée sur la figure 7, les premiers moyens de fixation 3 peuvent être intégrés à l'intérieur de la pièce d'habillage 15, ce qui permet d'obtenir une esthétique améliorée.

Dans la figure 8, les moyens de rappel sont formés de cordons élastique 19, disposé longitudinalement et associé de part et d'autre du rideau 2. Bien entendu, toutes les réalisations précédemment décrites peuvent intégrer des moyens de rappel de ce type. Selon cette réalisation, le rideau 2 se replie sur lui-même lorsqu'il se rétracte.

Selon une réalisation, le cordon élastique 19 est entrelacé dans le rideau, ce qui permet la rétraction du rideau « en accordéon ».

## Revendications

1. Dispositif de protection (1) des passagers d'un véhicule automobile, notamment de type break, destiné à être disposé entre le compartiment à bagages et l'habitacle, le dispositif comprenant :
• un rideau (2), notamment sous forme de filet,
• des premiers moyens (3) de fixation d'un premier bord transversal (4) du rideau (2) à la structure du véhicule,
• des deuxièmes moyens (5) de fixation d'un deuxième bord transversal (6) du rideau (2) à la structure du véhicule, les deuxièmes moyens (5) de fixation étant détachables,
• les moyens de fixation (3, 4) étant agencés pour permettre une tension du rideau en position d'utilisation,
le dispositif étant **caractérisé en ce que** le rideau (2) comprend au moins un moyen de rappel élastique (7) agencé pour permettre la rétraction longitudinale du rideau (2) lorsqu'il n'est pas utilisé, les deuxièmes moyens de fixation (5) étant détachés de la structure du véhicule.

2. Dispositif selon la revendication 1, **caractérisé en ce que** le moyen de rappel (7) comprend au moins un ressort à lame dont l'état enroulé est stable, disposé sur tout ou partie de la longueur du rideau (2), le rideau (2) s'enroulant sur lui-même lorsqu'il n'est pas utilisé.

3. Dispositif selon la revendication 2, **caractérisé en ce que** le ressort à lame présente une section transversale déformable entre une section aplatie lorsque le ressort est enroulé et une section bombée lorsque le ressort est déroulé, de sorte que le ressort présente deux positions stables.

4. Dispositif selon la revendication 2 ou 3, **caractérisé en ce que** le ressort est inséré dans une ganse associée à au moins un bord longitudinal (10) du rideau (2).

5. Dispositif selon la revendication 1, **caractérisé en ce que** le moyen de rappel comprend un cordon élastique (19), disposé longitudinalement et associé de part et d'autre du rideau (2), le rideau (2) étant replié sur lui-même lorsqu'il n'est pas utilisé.

6. Dispositif selon la revendication 5, **caractérisé en ce que** le cordon élastique (19) est entrelacé dans le rideau (2).

7. Ensemble de protection comprenant un dispositif (1) selon l'une quelconque des revendications précédentes et une pièce d'habillage (15) de la structure du véhicule, le premier bord transversal (4) du dispositif étant associé à proximité de la pièce d'habillage (15), la pièce d'habillage (15) comprenant un logement (16) destiné à accueillir le dispositif en position rétractée.

8. Ensemble de protection selon la revendication 7, **caractérisé en ce que** le dispositif (1) comprend en outre, disposé parallèlement à son deuxième bord transversal (6), une pièce de recouvrement (17) du logement (16) lorsque le dispositif est en position rétractée.

## Claims

1. Device for protecting (1) the passengers of a motor vehicle, of the station wagon type in particular, which is intended to be disposed between the luggage compartment and the passenger compartment, the device comprising:
- a curtain (2), in particular in the form of a net,
- first means (3) of fastening a first transverse edge (4) of the curtain (2) to the vehicle structure,
- second means (5) of fastening a second transverse edge (6) of the curtain (2) to the vehicle structure, the second fastening means (5) being detachable,
- the fastening means (3, 4) being arranged to enable stretching of the curtain in operating position,
the device being **characterised in that** the curtain (2) includes at least one elastic return means (7) arranged to enable the curtain (2) to be retracted longitudinally when not in use, the second fastening means (5) being detached from the vehicle structure.

2. Device according to claim 1, **characterised in that** the return means (7) includes at least one leaf spring of which the unwound state is stable, which is disposed over the entire length of the curtain (2) or a portion thereof, the curtain (2) being wound up when not in use.

3. Device according to claim 2, **characterised in that** the leaf spring has a cross section that is deformable between an oblate section when the spring is wound up and a convex section when the spring is unwound, whereby the spring has two stable positions.

4. Device according to claim 2 or 3, **characterised in that** the spring is inserted into a loop associated with at least one longitudinal edge (10) of the curtain (2).

5. Device according to claim 1, **characterised in that** the return means includes an elastic cord (19) which is disposed longitudinally and attached on both sides of the curtain (2), the curtain (2) being folded over when not in use.

6. Device according to claim 5, **characterised in that** the elastic cord (19) is interwoven into the curtain (2).

7. Protective assembly comprising a device (1) according to any one of the preceding claims and a trim piece (15) of the vehicle structure, the first transverse edge (4) of the device being attached in proximity to the trim piece (15), the trim piece (15) comprising a housing (16) intended to accommodate the device in retracted position.

8. Protective assembly according to claim 7, **characterised in that** the device (1) further includes a covering piece (17) for the housing (16), which is disposed parallel to the second transverse edge (6) thereof, when the device is in retracted position.

## Patentansprüche

1. Vorrichtung zum Schutz (1) der Insassen eines Kraftfahrzeugs, insbesondere eines Kombi-Kraftfahrzeugs, die dazu bestimmt ist, zwischen dem Gepäckraum und dem Fahrgastraum angeordnet zu werden und aus:
• einer Trennvorrichtung (2), insbesondere in Form eines Netzes,
• ersten Mitteln (3) zur Befestigung einer ersten Querkante (4) der Trennvorrichtung (2) an der Struktur des Fahrzeugs,
• zweiten Mitteln (5) zur Befestigung einer zweiten Querkante (6) der Trennvorrichtung (2) an der Struktur des Fahrzeugs besteht, wobei die zweiten Befestigungsmittel (5) abnehmbar sind,
• während die Befestigungsmittel (3,4) so ausgelegt sind, dass sie eine Spannung der Trennvorrichtung (2) in der Anwendungsposition ermöglichen,
**dadurch gekennzeichnet, dass** die Trennvorrichtung (2) mindestens ein elastisches Rückziehmittel (7) besitzt, das so ausgelegt ist, dass das Zurückziehen der Trennvorrichtung (2) in Längsrichtung ermöglicht wird, wenn sie nicht benutzt wird, wobei die zweiten Befestigungsmittel (5) von der Struktur des Fahrzeugs gelöst werden.

2. Vorrichtung nach Anspruch 1, **dadurch gekennzeichnet, dass** das Rückziehmittel (7) aus mindestens einer Blattfeder besteht, die im aufgerollten Zustand stabil ist und die ganz oder teilweise über die Länge der Trennvorrichtung (2) angeordnet ist, wobei die Trennvorrichtung (2) auf sich selbst aufgerollt ist, wenn sie nicht benutzt wird.

3. Vorrichtung nach Anspruch 2, **dadurch gekennzeichnet, dass** die Blattfeder einen Querschnitt besitzt, der zwischen einem flachen Querschnitt, wenn die Feder aufgerollt ist, und einem gewölbten Querschnitt, wenn die Feder abgerollt ist, verformbar ist, so dass die Feder zwei stabile Positionen aufweist.

4. Vorrichtung nach Anspruch 2 oder 3, **dadurch gekennzeichnet, dass** die Blattfeder in einer Schlaufe eingesetzt ist, die mindestens einer Längskante (10) der Trennvorrichtung (2) zugeordnet ist.

5. Vorrichtung nach Anspruch 1, **dadurch gekennzeichnet, dass** das Rückziehmittel aus einer elastischen Schnur (19) besteht, die in Längsrichtung angeordnet und der Trennvorrichtung (2) links und rechts zugeordnet ist, wobei die Trennvorrichtung (2) um sich selbst gefaltet ist, wenn sie nicht benutzt ist.

6. Vorrichtung nach Anspruch 5, **dadurch gekennzeichnet, dass** die elastische Schnur (19) mit der Trennvorrichtung (2) verknüpft ist.

7. Schutzeinrichtung mit einer Vorrichtung (1) nach einem der vorhergehenden Ansprüche und einem Verkleidungsteil (15) der Struktur des Fahrzeugs, wobei die erste Querkante (4) der Vorrichtung in der Nähe des Verkleidungsteils (15) angeordnet ist, während das Verkleidungsteil (15) eine Aufnahme (16) besitzt, die dazu dient, die Vorrichtung in eingezogener Position aufzunehmen.

8. Schutzeinrichtung nach Anspruch 7, **dadurch gekennzeichnet, dass** die Vorrichtung (1) weiterhin ein parallel zu ihrer zweiten Querkante (6) angeordnetes Abdeckteil (17) zum Abdecken der Aufnahme (16) besitzt, wenn sich die Vorrichtung in eingezogener Position befindet.
